# EUROPEAN PATENT SPECIFICATION

(11) **EP 3 135 118 B1**
(45) Date of publication and mention of the grant of the patent: **10.10.2018**
(21) Application number: 15306331.8
(22) Date of filing: 28.08.2015
(51) Int. Cl.: A23G 9/28, A23G 9/48, A23C 9/133

(54) **SYSTEMS AND METHODS FOR MAKING CONFECTIONS BY COMBINING INCLUSIONS WITH AN EXTRUDABLE MATERIAL**
SYSTEME UND VERFAHREN ZUR HERSTELLUNG VON SÜSSWAREN DURCH DIE KOMBINATION VON EINSCHLÜSSEN MIT EINEM EXTRUDIERBAREN KUNSTSTOFF
SYSTÈMES ET PROCÉDÉS DE FABRICATION DE CONFISERIES PAR COMBINAISON D'INCLUSIONS AVEC UN MATÉRIAU EXTRUDABLE

(43) Date of publication of application: 01.03.2017
(73) Proprietor: Mars Incorporated, McLean, VA 22101 (US)
(72) Inventor: GERBER, Yves, 67708 Saverne Cedex (FR); HUBAUT, Benedicte, 67708 Saverne Cedex (FR)
(74) Representative: Darby, Richard John

(56) References cited:
- EP-A1- 2 345 332
- WO-A1-99/41995
- US-A- 3 347 287
- US-A1- 2003 068 409
- US-B1- 6 663 374

## Description

### BACKGROUND

Multiregion confections are desired by consumers for the enjoyable eating experience provided by virtue of the variety of tastes and textures included in such confections. However, consumer acceptance and appreciation may often be gained or lost based upon small deviations in format, i.e., differing ratios in the different components, unanticipated or otherwise undesirable changes in the organoleptic qualities of the components as may be caused by processing or storage, etc.
US6663374 discloses an apparatus (2) for forming an extruded dessert of a primary ingredient such as ice cream and an inclusion ingredient such as fudge, said apparatus including: a main die (12) having a section with sidewalls (44) extending along and about a first axis (46) between first and second end portions (32,34), said sidewalls between said first and second end portions defining a cavity (30), at least one supply source (4) to feed said primary ingredient into the cavity of said main die substantially adjacent the first end portion thereof, said primary ingredient flowing through the cavity of the main die from adjacent the first end portion to the second end portion to be extruded outwardly of the main die from the second end portion thereof, said second end portion having an exit (12') defining a peripheral shape about the first axis and said extruded primary ingredient assuming the peripheral shape of said exit,said apparatus further including at least one intermediate die (24) positioned within the cavity of the main die and spaced from the sidewalls thereof to receive said inclusion ingredient such as fudge and insert said inclusion ingredient into the primary ingredient as said primary ingredient flows along the cavity of the main die along and about said intermediate die, said inclusion ingredient being inserted into said primary ingredient at an insertion location (7') adjacent the exit (12') of the second end portion (34) of the main die (12), at least a second supply source (14) to feed said inclusion ingredient into the intermediate die, said intermediate die having at least two, spaced-apart, top sections (52) and two, spaced-apart, middle sections (54), said intermediate die further including a common bottom section (62), said top sections receiving said inclusion ingredient from said second supply source and respectively extending from adjacent the first end portion of the main die to respective first locations (56) upstream of the insertion location (7'), said respective middle sections (54) extending from said respective first locations (56) to respective second locations (64) upstream of said insertion location (7'), said common bottom section (62) extending from said respective second locations (64) to said insertion location (7'), each of said top sections (52) of the intermediate die (24) having a first, inner, cross-sectional shape and said common bottom section (62) having an inner, cross-sectional shape different from said first shape, each of said middle sections (54) having an inner, cross-sectional shape gradually and progressively changing from substantially matching said first shape of said top section (52) to substantially matching at least a portion of the shape of the common bottom section (62).

Inclusions having a crisp texture are enjoyed by consumers, particularly when incorporated into a differently textured confection, such as ice cream, caramel, nougat, chocolate, and the like. However, particularly when multiple inclusions are desirably incorporated into the confection as a layer or a filling, they can be difficult to incorporate into multiregion confections at all, much less in a way that maintains the organoleptic integrity of each component of the confection. Consumers, and thus manufacturers, are particularly vexed by
air pockets within such layers or fillings, as such air pockets detract from the desired perception of indulgence experienced when consuming a confection.

An apparatus of manufacturing a multiregion confection including particulates or inclusions would thus be welcome in the art and would enjoy particular success if such apparatus could provide a layer or filling of particulates within the confection having minimal air incorporation.

### BRIEF DESCRIPTION

The apparatus of the invention is an apparatus for the manufacture of a multiregion confection. The apparatus includes an extrusion nozzle defining a first orifice, a second orifice, and a discharge end. The apparatus also includes a material feeder configured to force extrudable material through the first orifice. The apparatus also includes a dosing module that includes a housing defining a holding cavity configured to hold inclusions, a suction cavity, and a port. The second orifice of the extrusion nozzle is fluidly coupled to the port. The apparatus also includes a disk rotatably mounted with respect to the holding cavity. The disk defines a plurality of apertures for holding the inclusions. As the disk rotates the plurality of apertures move with respect to the housing such that each of the plurality of apertures arrives at a first location where the aperture is exposed on one side of the disk to the holding cavity and on the reverse side of the disk to the suction cavity. The port is disposed such that inclusions released from the plurality of apertures at a second location travel into the port. The second orifice is configured to direct the inclusions to combine with the extrudable material, and the nozzle is configured for extrusion of the combined extrudable material and inclusions out the discharge end.

The method of the invention is a method of making a multiregion confection. The method includes extruding an extrudable material through a first orifice. A disk defining a plurality of apertures is rotated such that each of the plurality of apertures travel into and out of an accumulation of inclusions. Suction is applied to each of the plurality of apertures as the aperture passes through the accumulation of inclusions, and the suction is maintained on each of the plurality of apertures as the aperture travels from the accumulation of inclusions to a release location. An inclusion is released from each of the plurality of apertures when the aperture arrives at the release location, and the inclusions held by the plurality of apertures are directed from the release location to a second orifice. The inclusions exiting the second orifice are combined with the extrudable material extruded from the first orifice.

### DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 is a perspective view of an example apparatus for the manufacture of a multiregion confection.
FIG. 2 is a cut-away view of an example dosing module of the apparatus of FIG. 1.
FIG. 3 is a perspective view of a portion of the dosing module of FIG. 2.
FIG. 4 is a side view of an example disk of the dosing module of FIG. 2.
FIG. 5A is a perspective view of an example suction cavity and an example non-suction structure defined in a housing of the dosing module of FIG. 2.
FIG. 5B is a cross-sectional view of an example suction cavity, example disk, and example holding cavity of the dosing module of FIG. 2.
FIG. 6 is a perspective view of an example disk of the dosing module of FIG. 2.
FIG. 7 is a perspective view of a portion of the dosing module of FIG. 2.
FIG. 8 is a perspective view of an example feature for removing excess inclusions from apertures on a disk of the dosing module of FIG. 2.
FIG. 9A is a cross-sectional view of an example extrusion nozzle of the apparatus of FIG. 1.
FIG. 9B is a cut-away view of an example extrusion nozzle of the apparatus of FIG. 1.
FIG. 10 is a flow diagram of an example method of making a multiregion confection.

In accordance with common practice, the various described features are not drawn to scale but are drawn to emphasize specific features relevant to the exemplary embodiments.

### DETAILED DESCRIPTION

The present specification provides certain definitions and a method to better define the subject matter and to guide those of ordinary skill in the art in the practice of the subject matter presented herein. Provision, or lack of the provision, of a definition for a particular term or phrase is not meant to imply any particular importance, or lack thereof. Rather, and unless otherwise noted, terms are to be understood according to conventional usage by those of ordinary skill in the relevant art.

The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not limited to any one position or spatial orientation.

If ranges are disclosed, the endpoints of all ranges directed to the same component or property are inclusive and independently combinable (e.g., ranges of "up to 25 wt.%, or, more specifically, 5 wt.% to 20 wt.%," is inclusive of the endpoints and all intermediate values of the ranges of "5 wt.% to 25 wt.%," etc.). As used herein, percent (%) conversion is meant to indicate change in molar or mass flow of reactant in a reactor in ratio to the incoming flow, while percent (%) selectivity means the change in molar flow rate of product in a reactor in ratio to the change of molar flow rate of a reactant.

Reference throughout the specification to "one example" or "an example" means that a particular feature, structure, or characteristic described in connection with an example is included in at least one embodiment. Thus, the appearance of the phrases "in one example" or "in an example" in various places throughout the specification is not necessarily referring to the same embodiment. Further, the particular features, structures or characteristics may be combined in any suitable manner in one or more embodiments.

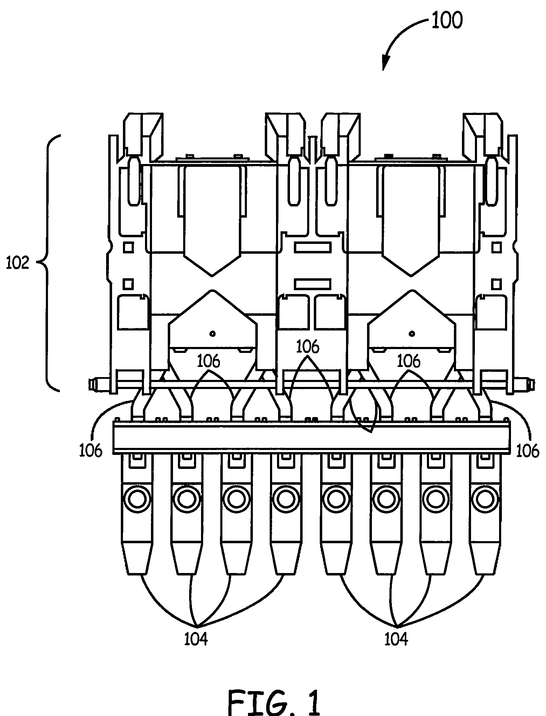

Figure 1 is a perspective view of an example apparatus 100 for the manufacture of a multiregion confection. The apparatus 100 can be used in an assembly process to manufacture a multiregion confection. The apparatus 100 takes as inputs an edible extrudable material and edible inclusions. The apparatus 100 combines the extrudable material and the inclusions to form the multiregion confection or a primitive of the multiregion confection. In the example shown in Figure 1, only the inclusions and the extrudable material are combined by the apparatus 100, however, in other examples additional edible substances can be combined with the inclusions and extrudable material by the apparatus 100. The assembly process for the multiregion confection can include one or more steps to prepare the inputs (e.g., extrudable material, inclusions) of the apparatus 100 and can include one or more steps after the inputs are combined by the apparatus 100 (e.g., cooling, forming, packaging).

The extrudable material can comprise any material that is capable of being extruded. Examples of extrudable material include, but are not limited to, ice cream, ice milk, frozen yogurt, chocolate, compound coating, carob coating, cocoa butter, butter fat, hydrogenated vegetable fat, illipe butter, fudge, medium and hard caramel, nougat, candy floss (also known as cotton candy), marzipan, hard boiled candy, toffee, butterscotch, nut brittle or croquant, pralines or nougats, truffles, fourres, nut paste, nut butter including peanut butter, nut creme, coconut paste, creme, creme paste, licorice paste, chocolate spread, chocolate crumb, taffy, fruit fillings, fondant including fondant-based cremes, frappe, fruit juice, vegetable juice, fruit puree, fruit pulp, vegetable pulp, vegetable puree, fruit sauce, vegetable sauce, honey, maple syrup, molasses, corn syrup, sugar syrup, polyol syrup, hydrogenated starch hydrolysate syrup, emulsions, vegetable oil, glycerin, propylene glycol, ethanol, liqueurs, chocolate syrup, dairy-based liquids such as milk, cream, or a combination of any number of these. As in a typical extrusion process the extrudable material is forced through a die (also referred to herein as an orifice) wherein the extrudable material takes the cross-sectional shape of the die upon exiting the die.

The inclusions can be any product in a granular form. In an example, the inclusions are composed of granules having a mostly uniform size and shape (e.g., generally spherical). Examples of suitable inclusions include, but are not limited to, fruit, including crystallized, lyophilized or dried fruit, nuts, coconut, crisped rice or other grains or seeds, cocoa beans, coffee beans, milk powders, freeze dried fruit, freeze dried vegetables, fat particles, cocoa powder, sucrose, starch, polyols such as xylitol, erythritol, sorbitol, mannitol, maltitol, isomalt, hydrogenated starch hydrosylates, waxes, doughs or baked goods, or bits or crumbs thereof such as cookie dough, cake batter, or cookie or bake bits, frosting, icings or glazes, or combinations of any number of these. The granular materials may themselves be coated with a confection, such as a crystallized sugar coating, chocolate, or compound chocolate coating. In an implementation of such an example, each granule has a generally spherical shape and a cookie type composition.

As mentioned above, the apparatus 100 takes the extrudable material and the inclusions and combines them into a composition and extrudes the composition for further processing. In an example, the composition is extruded into a continuous strip onto a conveying element. In other examples, the composition can be extruded into a discontinuous shape (e.g., strip/bar, ball, etc.). In any case, the continuous strip or discontinuous shape can be a completed multiregion confection ready for consumption or can be a confection primitive that is to be further processed to form a multiregion confection ready for consumption.

The apparatus 100 includes a dosing module 102 having one or more extrusion nozzles 104 fluidly coupled thereto. The dosing module 102 is configured to receive the inclusions and to provide the inclusions to each nozzle 104 at a controlled rate. Each nozzle 104 is configured to receive the inclusions from the dosing module 102 and also receive the extrudable material from a material feeder (not shown). The material feeder can be any suitable structure configured to force the extrudable material through the nozzle 104. Each nozzle 104 is configured to combine the inclusions with the extrudable material. Each nozzle 104 also includes a discharge end (orifice) from which the resulting composition is extruded. The dosing module 102 controls the rate at which the inclusions are provided to each nozzle 104. In the example shown in Figure 1, a respective tube 106 fluidly couples each nozzle 104 to the dosing module 102. In such an example, the dosing module 102 is configured to provide the inclusions to the respective tube 106, and each tube 106 is configured to direct the inclusions to its respect nozzle 104. The extrudable material enters each nozzle 104 through a respective aperture (not shown in Figure 1) defined in each nozzle 104. In the example shown in Figure 1, the apparatus 100 includes a plurality (eight) nozzles 104. In other examples, other numbers of nozzles 104 can be used, including a single nozzle.

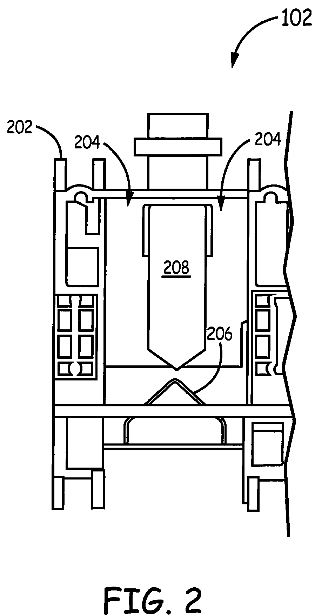

Figure 2 is a cut-away view of an example dosing module 102. The dosing module 102 includes a housing 202 which defines a holding cavity 204 for holding an accumulation of the inclusions. The inclusions can be provided to the holding cavity 204 and can accumulate in a bottom portion of the holding cavity 204. In an example, the housing 202 can include an inlet pipe 208 through which the inclusions enter the holding cavity 204 from a source such as a hopper 2. The housing 102 can define a wedge 206 in the bottom of the holding cavity 204 (e.g., below the inlet pipe 208) to divide the inclusions therein into two piles as discussed in more detail below.

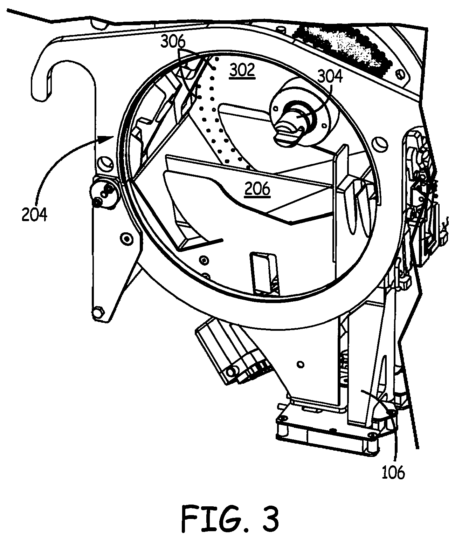

Figure 3 is a perspective view of a portion of the dosing module 102. In particular, Figure 3 illustrates the holding cavity 204 with one side of the cavity 204 removed such that the interior of the cavity 204 is visible. As shown, the dosing module 102 also includes a disk 302 that is disposed on the side of the holding cavity 204 and is rotatable mounted with respect to the holding cavity 204. The disk 302 is circular in shape and is rotated by a drive shaft 304 that connects to the disk 302 in the center of the circular shape. In example, the drive shaft 304 is directly driven by a motor (not shown). In other examples, one or more chains, gears, or belts can be used to rotatably couple the drive shaft 302 to the motor. In an example, the drive shaft 304 is circular in cross-section. In an example, the drive shaft 304 is exposed in the cavity 204, such that the inclusions contact the drive shaft 304. In such an example, the circular cross-section reduces the likelihood that inclusions will be damaged or stuck in a dead zone as the drive shaft 304 rotates within the cavity 204.

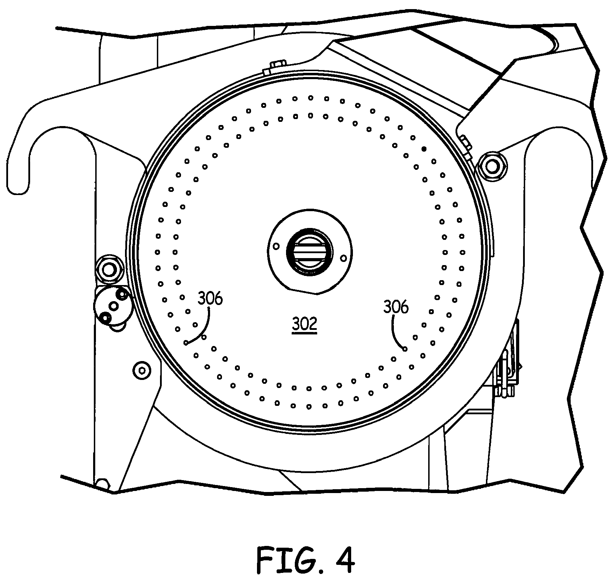

Figure 4 is a side view of an example disk 302. The disk 302 defines a plurality of apertures 306 extending from a first side of the disk 302 to the second side, which is reverse of the first side. The first side of the disk 302 (the side visible in Figure 3) is exposed to the holding cavity 204. The second side of the disk 302 is exposed to a suction cavity and a non-suction structure.

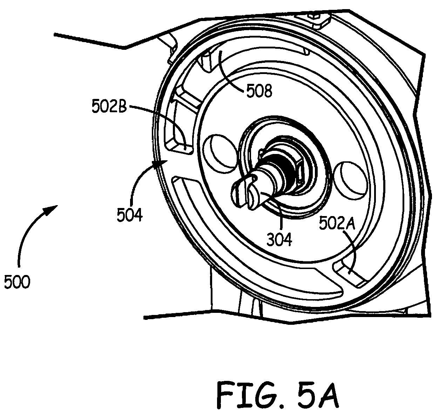

Figure 5A is a perspective view of an obturator 500 of the housing 202 which is disposed proximate the second side of the disk 302. The obturator 500 is a structure that defines the suction cavity 502 (includes 502A and 502B) and non-suction structure 504. Figure 5A illustrates the obturator 500 with the disk 302 removed from the drive shaft 304. When installed, disk 302 is mounted on the drive shaft 304 such that the second side of the disk 302 faces and is adjacent to the structure shown in Figure 5A. Accordingly, the suction cavity 502 and the non-suction structure 504 face and are immediately adjacent to the second side of the disk 302.

The suction cavity 502 is one or more depressions defined in the obturator 500 with respect to the second side of the disk 302, i.e., the side of the disk 302 not exposed to the holding cavity 204. The suction cavity 502 is fluidly coupled to a suction source (e.g., a fan) that acts to cause a negative pressure in the suction cavity 502 with respect to the holding cavity 204. In the example shown in Figure 5A, the suction cavity 502 is composed of two portions 502A and 502B which will be discussed in more detail below. The non-suction structure 504 can be any structure that does not cause a significant negative pressure on the second side of the disk 302. In the example shown in Figure 5A the non-suction structure 504 is a flat surface that is disposed close to the second side of the disk 302, such that the negative pressure applied in the suction cavity 502 is substantially isolated from the area corresponding to the non-suction structure 504.

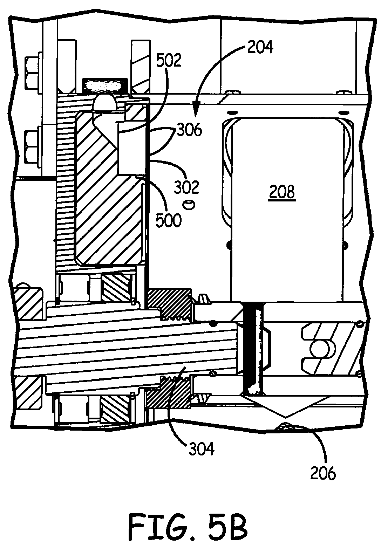

Figure 5B is a cross-sectional view of the suction cavity 502, disk 302, and holding cavity 204, where the disk 302 is oriented perpendicular to the page such that only the thin cross-section of the disk 302 is shown. As shown, the disk 302 is disposed between the holding cavity 204 and the suction cavity 502, such that the first side of the disk 302 is exposed to the holding cavity 204 and a portion of the second side of the disk 302 is exposed to the suction cavity 502. The suction cavity 502 is disposed such that the portion of the second side of the disk 302 that is exposed to the suction cavity 502 as the disk 302 rotates, includes the plurality of apertures 306. The suction cavity 502 is also disposed such that on the direct reverse (first) side of the disk 302 from the suction cavity 502 is the holding cavity 204. Moreover, the suction cavity 502 is disposed such that it is reverse (with respect to the disk 302) of a lower portion of the holding cavity 204 configured to have an accumulation of inclusions therein, and that the portion of the disk 302 that travels between this lower portion of the holding cavity 204 and the suction cavity 502 during rotation of the disk 302 includes the plurality of apertures 306.

This arrangement enables the plurality of apertures 306 to pass, as the disk 302 rotates, through a location at which a negative pressure is applied (via the suction cavity 502) to one side and an accumulation of inclusions (in the holding cavity 204) is present on the other side. The holding cavity 204 can be configured to direct the inclusions toward this location, for example, via the positioning of the inlet pipe 208 and/or the wedge 206. As each aperture 306 arrives at this location (also referred to herein as the "pick-up location") the negative pressure causes a granule (also referred to herein as an inclusion) of the inclusions to be held to the aperture 306. Each aperture 306 has a diameter that is smaller than a diameter of an inclusion, such that the inclusion cannot pass through the aperture 306. The inclusion, therefore, can be held to the aperture 306 by virtue of the negative pressure of the suction cavity 502 pulling the inclusion to the aperture 306. In an implementation of such an example, the apertures 306 can have a diameter between approximately 4-6.3 mm and the inclusions can have a diameter of approximately 2.75 mm and a density of about 0.62 kg/l.

The suction cavity 502 is disposed such that negative pressure is applied to the aperture 306 as the aperture 306 travels during rotation of the disk 302, from the pick-up location to a release location. This continued negative pressure holds the inclusion to the aperture 306 as the aperture 306 travels from the pick-up location to the release location. Since the aperture 306 travels in a circular path due to the rotation of the disk 302, the example suction cavity 502 shown in Figure 5A has an arc shape. The area of the non-suction structure 504 corresponds to the release location, because when the aperture 306 arrives at the area where the non-suction structure 504 is opposed to the second side of the aperture 306, the negative pressure applied via the suction cavity 502 is no longer applied to the second side of the aperture 306, which enables the inclusion held in the aperture 306 to release from the aperture 306. Accordingly, as the disk 302 rotates, each aperture 306 passes through the pick-up location where an inclusion is "picked-up" (i.e., initially held) to the aperture 306. The inclusion in each aperture is held to the aperture 306 during the time the aperture 306 travels from the pick-up location to the release location, where it is released from the aperture 306. The length of the suction cavity 502 corresponds to the length along the path of the aperture 306 in which the inclusion is held to the aperture 306. Accordingly, in the example shown in Figure 5A, the inclusion is held for slightly over half of the circular path of an aperture 306. The pick-up location and release location can encompass more than a single point in space; in particular, the pick-up location and release location can encompass a suitable respective portion of the path of an aperture 306 to enable the pick-up and release of an inclusion for each aperture 306.

The suction cavity 502 is fluidly coupled to the suction source via an inlet 508 defined in the suction cavity 502. In the example shown in Figure 5A, the suction cavity 502 is an elongated depression with respect to the planar surface of the disk 302, wherein the depression has an arc shape that corresponds to the path of the apertures 306 from the pick-up location to the release location. In other examples, other shapes can be used. The outer portions of the suction cavity 502 along with the non-suction structure 504 are disposed close enough to the second side of the disk 302 such that an effective negative pressure can be maintained within the suction cavity 502 by the walls of the suction cavity 502 wherein the second side of the disk 302 effectively closes off the suction cavity 502. Although in this example, the non-suction structure 504 is a flat surface disposed close to the disk 302, in other examples other structures can be used including a cavity or open space that is not fluidly coupled to the suction source.

In the example shown in Figure 5A, the suction cavity 502 includes two portions, a main portion 502A and a pre-release portion 502B. The main portion 502A has a more direct coupling to the inlet 508 than the pre-release portion 502B which has a more restricted coupling. In an example, the pre-release portion 502B is also shallower than the main portion 502A. Because of this difference in coupling to the inlet 508, the main portion 502A maintains a stronger (i.e., more negative) negative pressure than the pre-release portion 502B. This difference in negative pressure is used to securely hold the inclusion to an aperture 306 while the reduced negative pressure of the pre-release location helps initiate the release of the inclusion from the aperture 306. Accordingly, the main portion 502A encompasses the pick-up location, and the pre-release portion 502B is disposed on the portion of the path of the apertures 306 that is immediately prior to the release location. In an example, obturator 500 is configured such that the air speed in the main portion 502A is about 6 m/s and the air speed in the pre-release portion 502B is about 3 m/s. Stated another way, during stead state operation, the pressure within the main portion 502A can be about 150 millibar and the pressure within the pre-release portion 502B can be about 75 millibar.

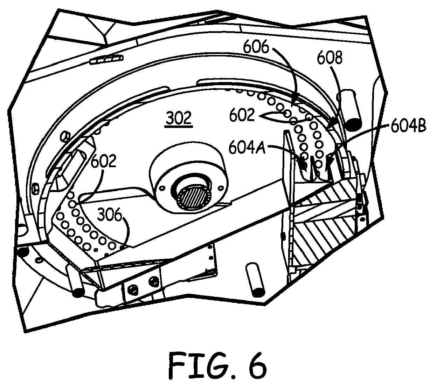

Figure 6 is a perspective view of the disk 302 wherein inclusions 602 are held to the plurality of apertures 306. One or more ports 604 (including 604A and 604B) defined in the housing 202 are also shown in Figure 6. The port(s) 604 are disposed proximate the release location of the inclusions 602 from the apertures 306 such that the inclusions 602 travel from their respective aperture 306 to a port 604. Each port 604 is fluidly coupled to a respective nozzle 104 such that inclusions placed in the port 604 is directed to the nozzle 104. In an example, each tube 106 is connected on one end to a port 604 and on the other end to a nozzle 104. In an example, the inclusions 602 are gravity fed from the release location to the nozzle 104, and the port(s) 604 are accordingly disposed with respect to the release location. Moreover, in such an example, the nozzle 104 is disposed lower than its corresponding port 604 enabling an inclusion 602 entering the port 604 to travel via gravity from the port 604 to the nozzle 104.

In the example shown in Figure 6, the apertures 306 are arranged in two circular rows on the disk 302. Each circular row is concentric with the center of rotation of the disk 302 such that the apertures 306 in each row maintain a constant distance from the center of rotation. In an example, the outer circular row 608 has 59 apertures 306 and the inner circular row has 56 apertures 306. In the example shown in Figure 6, each circular row of apertures 306 is configured to release inclusions into a different port 604, wherein the different ports 604 are fluidly coupled to different nozzles 104. In this way, a single disk 302 can provide inclusions 602 to multiple nozzles 104. Accordingly, a first circular row of apertures 306 holds respective inclusions 602 until a first release location at which the inclusions 602 are released into a first port 604A, and a second circular row of apertures 306 holds respective inclusions 602 until a second release location at which the inclusions 602 are released into a second port 604B. The first release location and the second release location can be caused by a single non-suction structure 504 or two distinct non-suction structures 504. As mentioned above, the first port 604A can be fluidly coupled to a first nozzle 104 such that inclusions 602 released into the first port 604A are directed to the first nozzle 104. The second port 604B can be fluidly coupled to a second nozzle 104 such that inclusions 602 released into the second port 604B are directed to the second nozzle 104. In other examples, a single circular row of apertures 306 and a single port 604 per disk 302 can be used. In yet other examples more than two circular rows of apertures 306 and more than two corresponding ports 604 per disk 302 can be used. In still other examples, the multiple circular rows of apertures 306 are used for a single port 604. In yet other examples, the apertures 306 on the disk are arranged in other manners on the disk 302.

In examples in which apertures 306 are at varying distances from the center of rotation of the disk 302 (as is the case with the two circular rows of apertures 306 shown in Figure 6), the apertures 306 will have slightly different pick-up locations. In particular, the apertures 306 of the inner circular row 606 on the disk 302 will have a slightly different pick-up location than the apertures 306 of the outer circular row 608 on the disk 302. In an implementation of such an example, all apertures 306 (e.g., both rows 606 and 608 of aperture 306) pick-up inclusions 602 from the same accumulation (e.g., pile) of inclusions in the holding cavity 204. In other implementations, apertures 306 at different distances from the center of rotation of the disk 302 can pick-up inclusions 602 from different accumulations (e.g., at different pick-up locations in different respective holding cavities 204). As should be understood from the above, variations in the number, location, and arrangement of the plurality of apertures 306 on the disk 302 as well as the number and position of the pick-up and release locations can be made.

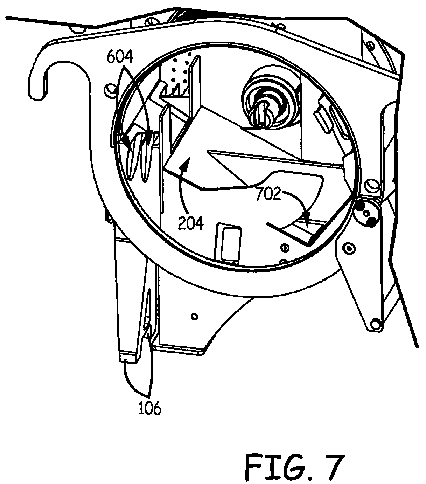

Figure 7 is a perspective view of a portion of the dosing module 102 illustrating the holding cavity 204, the ports 604, and the tubes 106. In the example shown in Figure 7, the holding cavity 204 is configured to direct (e.g., has a shape that directs) inclusions within the holding cavity 204 to accumulate (e.g., form a pile) in a lower portion 702 of the holding cavity 204. The disk 302 is configured to rotate counter-clockwise in the orientation shown in Figure 7. The disk 302 and the plurality of apertures 306 are disposed such that the plurality of apertures 306 pass by the accumulation of inclusions 602 in the lower portion 702. The suction cavity 502 (not shown in Figure 7) is directly on the other side of the disk 302 (also not shown in Figure 7) from the accumulation of inclusions 602 in the lower portion 702. As an aperture 306 travels between the suction cavity 502 and the accumulation of inclusions 602 in the lower portion 702 (the pick-up location), an inclusion 602 is sucked onto and held to the aperture 306. The inclusion 602 remains held to the aperture 306 until the aperture 306 reaches the release location near the ports 604. At the release location, the inclusion 602 is released from the aperture 306 and can drop via gravity into a respective port 604. This process occurs for each aperture 306 such that inclusions 602 are continuously being "picked-up" from the holding cavity 204 and released into a port 604 as the disk 302 rotates.

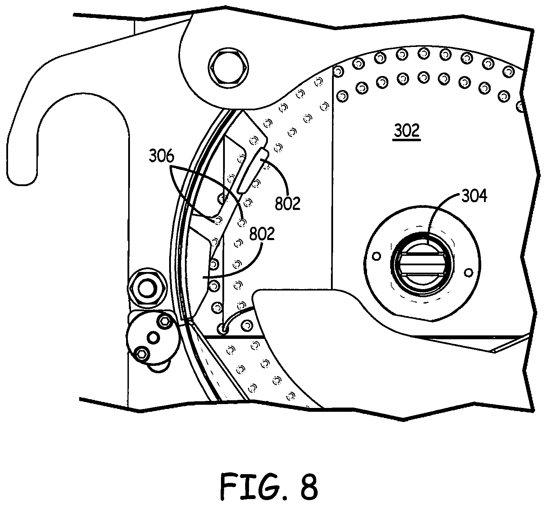

Figure 8 is a perspective view of an example feature 802 (also referred to as a comb) for removing excess inclusions 602 from the plurality of apertures 306. In an example, it is desired that each aperture 306 hold only a single inclusion 602 in order to assure a deterministic rate of inclusions 602 released into a port 604. During pick-up of an inclusion 602 by an aperture 306, multiple inclusions 602 may stick together and/or multiple inclusions 602 may become held to the aperture 306. The feature 802 is configured to address this by dislodging excess inclusions 602 from the plurality of apertures 306. In an example, the feature 802 is configured to dislodge excess inclusions 602 such that a single inclusion 602 is held in each aperture 306. Accordingly, in situations in which multiple inclusions 602 stick together or are otherwise held by a single aperture 306, the feature 802 is configured to dislodge the excess inclusions 602 from the aperture 306 such that only a single inclusion 602 remains held to the aperture 306. The feature 802 is disposed close to the first side (the side exposed to the holding cavity 204) of the disk 302 at a location between the pick-up location and the release location. The feature 802 has a surface that is oriented as a ramp with respect to the path of an aperture 306, wherein a first end of the ramp is farther away from the path of the aperture 306 and the second end of the ramp is nearer the path of the aperture 306. The feature 802 is stationary with respect to the rotating disk 302 such that the apertures 306 pass by the feature after picking-up one or more inclusions 602 and before arriving at the release location. As an aperture 306 passes by the feature 802, the ramp surface is disposed to contact any inclusions 602 that are outside of the area around the aperture 306 that would be accompanied by a single inclusion 602. The contact between the ramp surface and any inclusions 602 that are outside of the single inclusion area causes the inclusions to be dislodged from the aperture 306. In an example, the dislodged inclusions 602 fall back into the accumulation of inclusions to be picked-up at a later time. The ramp surface is oriented to become closer to the path of the aperture 306 farther along the path of the aperture 306, such that the feature 802 dislodges inclusions 602 increasingly closer to the aperture 306 as the aperture 306 travels along its path. At its closest distance to the path of the aperture 306, the ramp surface of the feature 802 is configured such that only a single inclusion 602 held by an aperture 306 is allowed to pass by the feature 802 without being dislodged. Thus, after passing by the feature, each aperture 306 hold only a single inclusion 602.

In the example shown in Figure 8 there are two circular rows of apertures 306 on the disk 302 and there are, therefore, two features 802, one feature 802 for each circular row of apertures 306. In other examples, other numbers and/or shapes of features 802 can be used. In an implementation of the example shown in Figure 8, the outer feature 802 for the outer row 608 of apertures 306 has a ramp length of about 3.5 cm and is about 1 mm from the apertures 306 in the outer row 608 at the closest point. The inner feature 802 for the inner row 606 of apertures 306 can have a ramp length of about 2.5 cm and be disposed about 1 mm from the apertures 306 in the inner row 606 at the closest point. The outer feature 802 can be disposed earlier in the respective path of apertures 306 than the inner feature 802 and there can be about 4 cm between the features 802.

In an example, removal of the suction applied to the aperture 306 is all that is needed to release an inclusion from the aperture 306. In other examples, however, additional means can be used to release an inclusion from an aperture 306. Such additional means can include applying a positive pressure to the second side of disk 302 at the release location to force the inclusion away from the aperture 306. In such an example, the non-suction structure 504 would include a cavity or other feature configured to enable the positive pressure to be applied. The additional means can include a mechanical dislodging feature that is disposed in the path of an inclusion 602 held to an aperture 306 such that the inclusion 602 contacts the dislodging feature and is dislodged from the aperture 306 thereby. Other means can also be used. In some examples multiple inclusion removal means are used together.

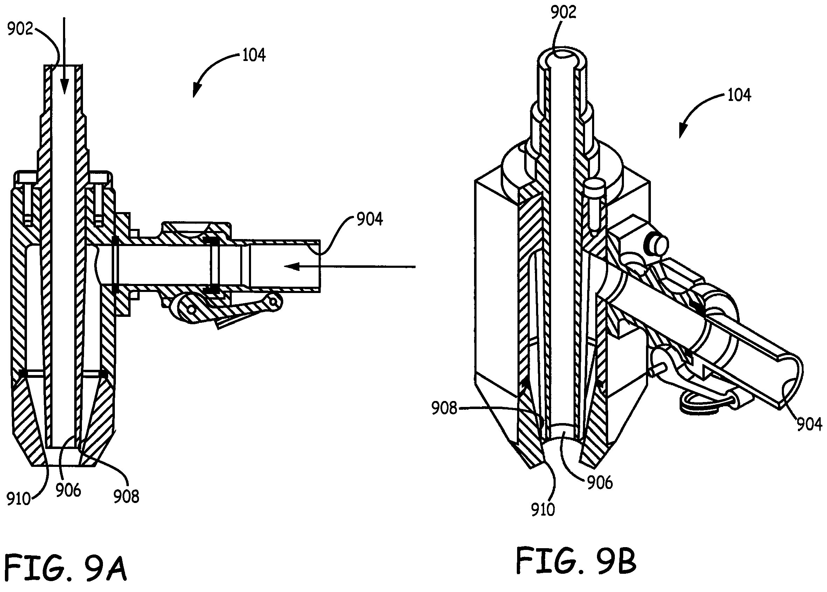

Figures 9A and 9B are a cross-sectional view and a cut-away view of an example extrusion nozzle 104. As discussed above, inclusions 602 that are released into a port 604 are directed to a nozzle 104 fluidly coupled to that port 604. The nozzle 104 is configured to combine the inclusions 602 with an extrudable material, and to extrude the combined extrudable material and inclusions 602. In the example nozzle 104 shown in Figure 9A, the inclusions 602 enters the nozzle 104 through a first inlet 902 and the extrudable material enters the nozzle 104 through a second inlet 904. The inclusions 602 travel from the first inlet 902 to a first orifice 906. The extrudable material travels from a second inlet 904 to a second orifice 908. The first orifice 906 and the second orifice 908 are adjacent to each other such that upon exiting the first orifice 906, the inclusions 602 combine with the extrudable material to form a combined extrudable material. In an example, the first orifice 906 is withdrawn inside the nozzle 104 with respect to a discharge end 910 of the nozzle 104. In an implementation of such an example, the first orifice 906 is withdrawn approximately 9 mm.

In the example nozzle 104 shown in Figures 9A and 9B, the second orifice 908 is not a defined endpoint of a tube, instead the second orifice 908 is a region within the nozzle 104 having an annular shape that surrounds the first orifice 906. The second orifice 908 is defined by the transition from the extrudable material without the inclusions 602 (which is prior to the second orifice 908) to the combined extrudable material including the inclusions 602 (which is after the second orifice 908). Since the first orifice 906 and the second orifice 908 are both within the nozzle 104, the inclusions 602 combine with the extrudable material within the nozzle 104. In an example, the first orifice 906 is concentrically located with respect to the second orifice 908. In an implementation of such an example, the second orifice 908 is less than 3 mm (e.g., 1-2 mm) from the first orifice 906. The force applied to the extrudable material forces the combined extrudable material and inclusions 602 out of the discharge end 910 of the nozzle 104. Thus, the combined extrudable material and inclusions 602 is extruded from the discharge end 910 of the nozzle 104. In an example, the nozzle 104 is composed of metal (e.g., sheet metal) and different parts of the nozzle 104 are fastened together using a mechanical fastener such as a rivet, screw, bolt, or the like.

In an example, the inclusions 602 are configured such that they generally maintain their structure in the combined extrudable material and inclusions 602. In other examples, the inclusions 602 need not maintain their structure in the combined extrudable material, for example if the inclusions dissolve into and become part of the extrudable material.

The first orifice 906, second orifice 908, and discharge end 910 can be any suitable shape and in any suitable location relative to one another to achieve the desired output shape and ratio of inclusions 602 to extrudable material. In the example shown in Figures 9A and 9B, the first orifice 906 is circular in shape and the second orifice 908 annularly surrounds the first orifice 906. This enables the combined extrudable material and inclusions 602 to comprise a strip of extrudable material with the inclusions 602 disposed inside of the strip. In other examples, the nozzle 104 can be configured such that the inclusions are dispersed throughout the extrudable material, or the inclusions are disposed along a top, bottom, and/or side portion of a piece or strip of extrudable material.

The discharge end 910 can has a generally rectangular shape to form a rectangular strip of the combined extrudable material and inclusions 602. The nozzle 104 can be configured to direct the strip of combined extrudable material and inclusions 602 onto a conveying element. The conveying element can carry the strip of combined extrudable material and inclusions 602 to be further processed. In an example, the discharge end 910 of the nozzle 104 is disposed to extrude the combine material in a generally perpendicular orientation to and above a horizontal conveying element. In an example, the discharge end 910 is disposed approximately 35 mm apart from the conveying element.

In an example the nozzle 104 is disposed relative to its fluidly coupled port 604 and oriented such that inclusions 602 traveling into the first inlet 902 can be gravity fed to the first orifice 906. In an implementation of this example, the nozzle 104 is oriented such that the path from the first inlet 902 to the first orifice 906 is generally vertical such that the rate of travel (drop) of the inclusions 602 does not decrease (e.g., is substantially constant) from the first inlet 902 to the first orifice 906. In an implementation of such an example, the nozzle 104 is disposed below the dosing module 102. In an example, the entire path (e.g., tube 106 and nozzle 104) of the inclusions 602 from the port 604 to the first orifice 906 is configured such that the rate of travel of the inclusions 602 from the first inlet 902 to the first orifice 906 does not decrease (e.g., is substantially constant). In this way, apparatus 100 is configured such that once the inclusions 602 are released into a port 604, the inclusions 602 fall continuously (i.e., without stopping) from the port 604 to the first orifice 906. In an example, the continuous fall is configured such that the inclusions 602 do not accumulate in the path from the port 604 to the first orifice 906, which enables the inclusions 602 to fall from port 604 until they are slowed substantially when the contact the extrudable material upon exiting the first orifice 906. Accordingly, the apparatus 100 is configured to drop the inclusions 602 individually into or onto the stream of extrudable material. Such a configuration enables the density of the inclusions 602 in the extrudable material to be precisely set and consistently maintained, because the rate of combination of the inclusions 602 with the extrudable material is directly related to the rate of release of inclusions 602 into a respective port 604. Moreover, the rate of release of inclusions 602 into a port 604 can be set based on the design (e.g., number and arrangement) of apertures 306 on the disk 302, and can be controlled during operation based on the rate of rotation of the disk 302.

Apparatus 100 can further include additional extrusion nozzles/orifices for the combination of additional confectionery products with the extrudable material and/or inclusions for manufacture of the multiregion confection. For example, strips, ribbons, or tubes of caramel, fudge, chocolate, nougat, or the like can be extruded through such additional nozzle/orifices to be under, and/or on top of, the combined extrudable material and inclusions. Additional inclusions can be provided in connection with such strips, ribbons, or tubes, via the mechanism described herein, or any other method known in the art.

Apparatus 100 can also include one or more slicers, knives, air knives, or other positioning devices to separate the combined extrudable material and inclusions into the desired final format, e.g., single serving or multiserving units. Further apparatus 100 can include coating or enrobing equipment to apply a confectionery coating to the exterior of the combined extrudable material and inclusions.

In an example, the apparatus 100 can include appropriate electronics (e.g., one or more processing devices along with one or more data storage devices having instructions thereon) that are configured to control operation of the apparatus 100. For example, the electronics could control a motor for rotation of the disk 302, a suction source for the suction cavities 502, a material feeder for the extrudable material and/or other aspects of operation of the apparatus 100. In an example, the apparatus 100 can include an optical sensor that is configured to sense inclusions along the path between a port 604 and its nozzle 104. In an implementation of such an example, the optical sensor can be configured to sense inclusions approximately 2-3 mm above the first orifice 906 of the nozzle 104. The electronics on the apparatus 100 can be configured to take an appropriate action if the output from the optical sensor indicates that the rate of inclusions 602 traveling between the port 604 and its nozzle 104 is outside of a desired range (i.e., the rate of inclusions 602 is too high or too low). Such an appropriate action can be initiating an alert or stopping the apparatus 100.

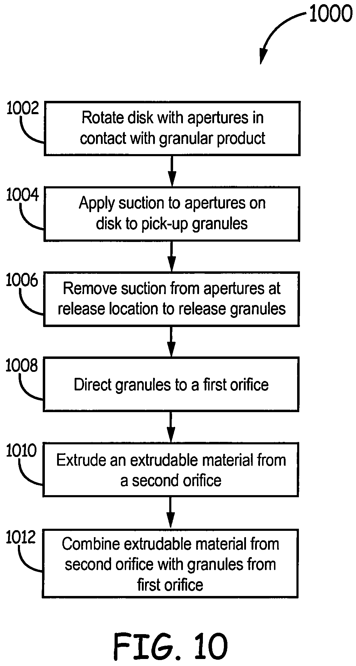

Figure 10 is a flow diagram of an example method 1000 of operating the apparatus 100. The apparatus 100 is configure to combine inclusions with an extrudable material at a controlled rate. Method 1000 includes rotating the disk 302 having the plurality apertures 306 thereon such that the apertures 306 come in contact with inclusions (e.g., an accumulation of inclusions) (block 1002). As an aperture 306 comes in contact with the inclusions (at the pick-up location) a suction is applied to the side (of the aperture 306/disk 302) that is not in contact with the inclusions (the second side of the disk 302) (block 1004). The suction causes one or more inclusions 602 to be held to the aperture 306. The suction is maintained on the aperture 306 as the aperture 306 travels from the pick-up location to a release location. In an example, excess inclusions 602 held by the aperture 306 are removed (e.g., by feature 802) prior to the aperture 306 arriving at the release location (block 1006). When aperture 306 arrives at the release location, the suction is removed from the aperture 306 and the inclusion 602 is released from the aperture 306. The inclusion 602 is released from the aperture 306 into a port 604 and is directed to a first orifice 906 (block 1008) (e.g., by the tube 106 and nozzle 104). Blocks 1004, 1006, 1008 can be repeated for a plurality of apertures 306 on the disk 302 to release a plurality of inclusions 602 into the port 604. Extrudable material is extruded from a second orifice 908 (block 1010). The inclusions 602 exiting the first orifice 906 are directed to contact and combine with the extrudable material from the second orifice 908 to form a combined extruded material and inclusions (block 1012). Combining the inclusions with the extrudable material can include coaxially surrounding the inclusions with the extrudable material. In some examples, method 1000 can include combining additional confectionary materials with the extrudable material and/or inclusions. In an example, the inclusions 602 exiting the first orifice 906 are directed to combine with the extrudable material within a nozzle 104 and the combined extrudable material and inclusions 602 are extruded from a discharge end 910 of the nozzle 104. The combined extrudable material and inclusions can be extruded into a strip onto a conveying element. In an example, the combined extrudable material and inclusions includes, by weight, 22.88% cookie inclusions and 77.11% extruded ice cream.

Method 1000 can also include one or more acts performed to the strip of combined extrudable material and inclusions, including, but not limited to, adding one or more of strips or ribbons of confectionary coating (e.g., caramel, chocolate), dicing the strip, cooling, or multiple such acts. Such one or more acts can create a final product from the combined extrudable material and inclusions. In an example, the final product includes, by weight, 13.1% cookie inclusions, 44.1% ice cream, 32.8% chocolate, and 9.9% caramel. In an example, the conveying element travels at about 3.7 m/min and the apparatus 100 extrudes about 1460 liters/hr. of ice cream through 24 nozzles.

In some examples a start-up operation can be used when initiating operation of the apparatus 100. Such a start-up operation can include, for example, rotating the disk 302 at a slow and/or gradually increasing rate, and providing a reduced and/or gradually increasing the suction applied to the apertures 306.

In an example, the apparatus 100 includes multiple nozzles 104 per holding cavity 204. Having multiple nozzles 104 receive inclusions 602 from a given holding cavity 204 can enable the apparatus 100 to be constructed in a compact manner. In an example, multiple nozzles 104 receive inclusions 602 from a given holding cavity 204 by having the apertures 306 on a disk 302 release inclusions 602 into multiple ports 604 which are fluidly coupled to respective nozzles 104. An implementation of such an example is discussed above with respect to the two circular rows of apertures 306 and two corresponding ports 604A, 604B. In some examples, multiple nozzles 104 can receive inclusions 602 from a given holding cavity 204 by having multiple disks 302 configured to "pick-up" inclusions 602 from a given holding cavity 204, wherein each disk 302 releases inclusions 602 into a respective one or more ports 604, wherein each port 604 is fluidly coupled to a respective nozzle 104. In an implementation of such an example, a first disk 302 can be disposed on one side of the holding cavity 204 and a second disk can be disposed on the opposite side of the holding cavity 204. As shown in Figures 2 and 3, in such an implementation, a wedge 206 can be used to divide the inclusions 602 in the holding cavity 204 into two separate accumulations (e.g., piles) and to direct the inclusions 602 in the holding cavity 204 to the first disk 302 on a first side of the wedge 206 and to the second disk 302 on the second side of the wedge 206. In such an implementation, the aperture 306 arrangement on each disk 302 can be configured to release inclusions 602 into multiple respective ports 604. In such an example, each disk 302 can have a corresponding suction cavity 502, although multiple the suction cavities 502 can be fluidly coupled to the same suction source. In one example, two disks 302 each having two circular rows of apertures 306 can be configured to "pick-up" inclusions 602 from a given holding cavity 204 and each row of apertures 306 can be configured to release inclusions 602 into a respective port 604. In such an example, four nozzles 104 can receive a controlled dosing of inclusions 602 from a single holding cavity 204. In other examples, other numbers of disks 302, arrangements of apertures 306, and numbers of nozzles 104 per holding cavity 204 can be used. Regardless of the particular configuration of disks 302, aperture 306, and nozzles 104, a given apparatus 100 can have a single holding cavity 204 with its corresponding disk(s) 302, nozzle(s) 104, etc., or multiple holding cavities 204 each with a corresponding disk(s) 302, nozzle(s) 104, and other component(s) as discussed above.

## Claims

1. An apparatus for the manufacture of a multiregion confection, the apparatus comprising:
an extrusion nozzle (104) defining a first orifice (906), a second orifice (908), and a discharge end (910);
a material feeder configured to force extrudable material through the first orifice (906);
a dosing module (102) including:
a housing (202) defining:
a holding cavity (204) configured to hold inclusions (602);
a suction cavity (502); and
a port (604), wherein the second orifice (908) of the extrusion nozzle (104) is fluidly coupled to the port;
a disk (302) rotatably mounted with respect to the holding cavity (204), the disk defining a plurality of apertures (306) for holding the inclusions (602), wherein as the disk (302) rotates the plurality of apertures (306) move with respect to the housing (202) such that each of the plurality of apertures (306) arrives at a first location where the aperture is exposed on one side of the disk to the holding cavity (204) and on the reverse side of the disk to the suction cavity (502), wherein the port (604) is disposed such that inclusions released from the plurality of apertures at a second location travels into the port,
wherein the second orifice (908) is configured to direct the inclusions (602) to combine with the extrudable material, and wherein the nozzle (104) is configured for extrusion of the combined extrudable material and inclusions out the discharge end (910).

2. The apparatus of claim 1, wherein the one or more structures are configured such that the inclusions (602) are gravity fed from the dosing module (102) to the second orifice (908).

3. The apparatus of claim 1, wherein each of the plurality of apertures (306) arrives at the second location where the aperture is exposed to a non-suction structure (504) on the reverse side of the disk (302).

4. The apparatus of claim 3, comprising:
inclusions (602) in the holding cavity (204),
wherein the holding cavity is configured such that inclusions are directed to the first location,
wherein suction applied by the suction cavity (502) to each aperture (306) when the aperture arrives at the first location holds an inclusion to the aperture, wherein the suction applied by the suction cavity holds the inclusion to the aperture until the aperture arrives at the second location where the lack of suction of the non-suction structure (504) causes the inclusion to release from the aperture.

5. The apparatus of claim 1, wherein the plurality of apertures (306) are disposed in a circular row that is concentric with a rotation axis of the disk.

6. The apparatus of claim 1, comprising:
a second extrusion nozzle defining a third orifice and a fourth orifice, wherein the fourth orifice of the second extrusion nozzle is fluidly coupled to a second port;
wherein the material feeder is configured to force extrudable material through the third orifice; and
wherein the plurality of apertures (306) are disposed in a first circular row on the disk (302), wherein the port (604) and the first circular row are disposed such that inclusions (602) released from the first circular row at the second location travels into the first port,
wherein the disk defines a second plurality of apertures in a second circular row on the disk, wherein the second port and the second circular row are disposed such that inclusions released from the second circular row travels into the second port,
wherein the fourth orifice is configured to direct the inclusions to combine with the extrudable material.

7. The apparatus of claim 6, comprising:
a third extrusion nozzle defining a fifth orifice and a sixth orifice, wherein the fifth orifice of the third extrusion nozzle is fluidly coupled to a third port;
a fourth extrusion nozzle defining a seventh orifice and an eighth orifice, wherein the seventh orifice of the fourth extrusion nozzle is fluidly coupled to a fourth port;
wherein the material feeder is configured to force extrudable material through the fifth and seventh orifices; and
wherein the dosing module includes a second disk (302) rotatably mounted with respect to the holding cavity, the second disk defining a third plurality of apertures (306) in a third circular row on the disk and a fourth plurality of apertures in a fourth circular row on the disk,
wherein as the disk rotates the second plurality of apertures move with respect to the housing (202) such that each of the second plurality of apertures arrives at a third location where the aperture is exposed on one side of the disk to the holding cavity (204) and on the reverse side of the disk to a suction cavity (502), and at a fourth location where the aperture is exposed to a non-suction structure (504) on the reverse side,
wherein the third port and the third circular row are disposed such that inclusions released from the third circular row at the fourth location travels into the third port, wherein the fourth port and the fourth circular row are disposed such that inclusions released from the fourth circular row travels into the fourth port,
wherein the sixth orifice is configured to direct the inclusions to combine with the extrudable material, wherein the eighth orifice is configured to direct the inclusions to combine with the extrudable material.

8. The apparatus of claim 1, wherein the first orifice (906) and the second orifice (908) are defined within the extrusion nozzle.

9. The apparatus of claim 1, wherein the first orifice (906) annularly surrounds the second orifice (908).

10. The apparatus of claim 9, wherein the second orifice (908) is generally concentric with respect to the first orifice (906).

11. The apparatus of claim 9, wherein the first orifice (906) and the second orifice (908) are withdrawn with respect to the discharge end (910) of the extrusion nozzle (104) such that the inclusions (602) combine with the extrudable material within the extrusion nozzle (104).

12. The apparatus of claim 1, wherein the extrusion nozzle (104) is configured to form a strip of the combined extrudable material and inclusions (602) and to direct the strip of combined extrudable material and inclusions onto a conveying element.

13. The apparatus of claim 1, wherein a diameter of the plurality of apertures (306) is smaller than a diameter of the inclusions (602).

14. The apparatus of claim 1, wherein the inclusions (602) are one of a piece of cookie, nut, fruit, pretzel, or combination of these.

15. A method of making a multiregion confection comprising:
extruding an extrudable material through a first orifice (906);
rotating a disk (302) defining a plurality of apertures (306) such that each of the plurality of apertures travel into and out of an accumulation of inclusions (602);
applying suction to each of the plurality of apertures as the aperture passes through the accumulation of inclusions;
maintaining suction on each of the plurality of apertures as the aperture travels from the accumulation of inclusions to a release location;
releasing an inclusion from each of the plurality of apertures when the aperture arrives at the release location;
directing the inclusions held by the plurality of apertures from the release location to a second orifice (908); and
combining the inclusions exiting the second orifice with the extrudable material extruded from the first orifice.

## Patentansprüche

1. Vorrichtung zur Herstellung einer Mehrbereichssüßware, die Vorrichtung aufweisend:
eine Extrusionsdüse (104), die eine erste Öffnung (906), eine zweite Öffnung (908) und ein Ablassende (910) definiert;
eine Materialzufuhr, die zum Drängen von extrudierbarem Material durch die erste Öffnung (906) konfiguriert ist;
ein Dosiermodul (102), enthaltend:
ein Gehäuse (202), das folgendes definiert:
einen Haltehohlraum (204), der zum Halten von Einschlüssen (602) definiert ist;
einen Saughohlraum (502); und
einen Durchlass (604), wobei die zweite Öffnung (908) der Extrusionsdüse (104) fluidtechnisch an den Durchlass gekuppelt ist;
eine Scheibe (302), die drehbar bezüglich des Haltehohlraums (204) angebracht ist, wobei die Scheibe mehrere Löcher (306) zum Halten der Einschlüsse (602) definiert, wobei sich die mehreren Löcher (306), wenn sich die Scheibe (302) dreht, derart bezüglich des Gehäuses (202) bewegen, dass jedes der Löcher (306) an einer ersten Stelle ankommt, an der das Loch auf einer Seite der Scheibe zum Haltehohlraum (204) freiliegt und auf der Rückseite der Scheibe zum Saughohlraum (502), wobei der Durchlass (604) derart angeordnet ist, dass Einschlüsse, die von den mehreren Löchern an einer zweiten Stelle freigegeben werden, in den Durchlass wandern,
wobei die zweite Öffnung (908) zum Leiten der Einschlüsse (602) zur Kombination mit dem extrudierbaren Material konfiguriert ist, und wobei die Düse (104) zur Extrusion des kombinierten extrudierbaren Materials und Einschlüssen aus dem Ablassende (910) konfiguriert ist.

2. Vorrichtung nach Anspruch 1, wobei die eine oder mehr Strukturen derart konfiguriert sind, dass die Einschlüsse (602) vom Dosiermodul (102) zur zweiten Öffnung (908) durch Einwirkung von Schwerkraft zugeführt werden.

3. Vorrichtung nach Anspruch 1, wobei jedes der mehreren Löcher (306) an der zweiten Stelle ankommt, an der das Loch zu einer nichtsaugenden Struktur (504) auf der Rückseite der Scheibe (302) hin freiliegt.

4. Vorrichtung nach Anspruch 3, aufweisend:
Einschlüsse (602) im Haltehohlraum (204),
wobei der Haltehohlraum derart konfiguriert ist, dass Einschlüsse zur ersten Stelle geleitet werden,
wobei Ansaugen, das durch den Saughohlraum (502) auf jedes Loch (306) ausgeübt wird, wenn das Loch an der ersten Stelle ankommt, einen Einschluss am Loch hält, wobei das Ansaugen, das durch den Saughohlraum ausgeübt wird, den Einschluss am Loch hält, bis das Loch an der zweiten Stelle ankommt, an der das Fehlen der Ansaugung der nichtsaugenden Struktur (504) bewirkt, dass sich der Einschluss vom Loch löst.

5. Vorrichtung nach Anspruch 1, wobei die mehreren Löcher (306) in einer kreisförmigen Reihe angeordnet sind, die mit einer Drehachse der Scheibe konzentrisch ist.

6. Vorrichtung nach Anspruch 1, aufweisend:
eine zweite Extrusionsdüse, die eine dritte Öffnung und eine vierte Öffnung definiert, wobei die vierte Öffnung der zweiten Extrusionsdüse fluidtechnisch an einen zweiten Durchlass gekuppelt ist;
wobei die Materialzufuhr zum Drängen von extrudierbarem Material durch die dritte Öffnung konfiguriert ist; und
wobei die mehreren Löcher (306) in einer ersten kreisförmigen Reihe an der Scheibe (302) angeordnet sind, wobei der Durchlass (604) und die erste kreisförmige Reihe derart angeordnet sind, dass Einschlüsse (602), die von der ersten kreisförmigen Reihe an der zweiten Stelle freigegeben werden, in den ersten Durchlass wandern,
wobei die Scheibe eine zweite Vielzahl von Öffnungen in einer zweiten kreisförmigen Reihe an der Scheibe definiert, wobei der zweite Durchlass und die zweite kreisförmige Reihe derart angeordnet sind, dass Einschlüsse, die von der zweiten kreisförmigen Reihe freigegeben werden, in den zweiten Durchlass wandern,
wobei die vierte Öffnung zum Leiten der Einschlüsse zur Kombination mit dem extrudierbaren Material konfiguriert ist.

7. Vorrichtung nach Anspruch 6, aufweisend:
eine dritte Extrusionsdüse, die eine fünfte Öffnung und eine sechste Öffnung definiert, wobei die fünfte Öffnung der dritten Extrusionsdüse fluidtechnisch an einen dritten Durchlass gekuppelt ist;
eine vierte Extrusionsdüse, die eine siebte Öffnung und eine achte Öffnung definiert, wobei die siebte Öffnung der vierten Extrusionsdüse fluidtechnisch an einen vierten Durchlass gekuppelt ist;
wobei die Materialzufuhr zum Drängen von extrudierbarem Material durch die fünfte und siebte Öffnung konfiguriert ist; und
wobei das Dosiermodul eine zweite Scheibe (302) enthält, die drehbar bezüglich des Haltehohlraums angebracht ist, wobei die zweite Scheibe eine dritte Vielzahl von Löchern (306) in einer dritten kreisförmigen Reihe an der Scheibe und eine vierte Vielzahl von Löchern in einer vierten kreisförmigen Reihe an der Scheibe definiert,
wobei sich die zweite Vielzahl von Löchern, wenn sich die Scheibe dreht, derart bezüglich des Gehäuses (202) bewegt, dass jedes der zweiten Vielzahl von Löchern an einer dritten Stelle ankommt, an der das Loch auf einer Seite der Scheibe zum Haltehohlraum (204) freiliegt und auf der Rückseite der Scheibe zu einem Saughohlraum (502), und an einer vierten Stelle ankommt, an der das Loch zu einer nichtsaugenden Struktur (504) auf der Rückseite hin freiliegt,
wobei der dritte Durchlass und die dritte kreisförmige Reihe derart angeordnet sind, dass Einschlüsse, die von der dritten kreisförmigen Reihe an der vierten Stelle freigegeben werden, in den dritten Durchlass wandern, wobei der vierte Durchlass und die vierte kreisförmige Reihe derart angeordnet sind, dass Einschlüsse, die von der vierten kreisförmigen Reihe freigegeben werden, in den vierten Durchlass wandern,
wobei die sechste Öffnung zum Leiten der Einschlüsse zur Kombination mit dem extrudierbaren Material konfiguriert ist, wobei die achte Öffnung zum Leiten der Einschlüsse zur Kombination mit dem extrudierbaren Material konfiguriert ist.

8. Vorrichtung nach Anspruch 1, wobei die erste Öffnung (906) und die zweite Öffnung (908) innerhalb der Extrusionsdüse definiert sind.

9. Vorrichtung nach Anspruch 1, wobei die erste Öffnung (906) die zweite Öffnung (908) ringförmig umgibt.

10. Vorrichtung nach Anspruch 9, wobei die zweite Öffnung (908) im Wesentlichen konzentrisch bezüglich der ersten Öffnung (906) ist.

11. Vorrichtung nach Anspruch 9, wobei die erste Öffnung (906) und die zweite Öffnung (908) bezüglich des Ablassendes (910) der Extrusionsdüse (104) derart zurückgenommen sind, dass sich die Einschlüsse (602) mit dem extrudierbaren Material innerhalb der Extrusionsdüse (104) kombinieren.

12. Vorrichtung nach Anspruch 1, wobei die Extrusionsdüse (104) zum Ausbilden eines Streifens des kombinierten extrudierbaren Materials und Einschlüssen (602) und zum Leiten des Streifens von kombiniertem extrudierbarem Material und Einschlüssen auf ein Förderelement konfiguriert ist.

13. Vorrichtung nach Anspruch 1, wobei ein Durchmesser der mehreren Öffnungen (306) kleiner als ein Durchmesser der Einschlüsse (602) ist.

14. Vorrichtung nach Anspruch 1, wobei die Einschlüsse (602) eines von einem Keks-, Nuss-, Obst-, Brezelstücks oder eine Kombination derselben ist.

15. Verfahren zum Herstellen einer Mehrbereichssüßware, aufweisend:
Extrudieren eines extrudierbaren Materials durch eine erste Öffnung (906);
Drehen einer Scheibe (302), die mehrere Löcher (306) definiert, sodass jede der mehreren Löcher in eine und aus einer Anhäufung von Einschlüssen (602) wandert;
Ausüben von Ansaugen auf jedes der mehreren Löcher, wenn das Loch die Anhäufung von Einschlüssen durchläuft;
Beibehalten des Ansaugens auf jedes der mehreren Löcher, wenn das Loch von der Anhäufung von Einschlüssen zu einer Freigabestelle wandert;
Freigeben eines Einschlusses von jedem der mehreren Löcher, wenn das Loch an der Freigabestelle ankommt;
Leiten der Einschlüsse, die durch die mehreren Löcher gehalten werden, von der Freigabestelle zu einer zweiten Öffnung (908); und
Kombinieren der Einschlüsse, die aus der zweiten Öffnung austreten, mit dem extrudierbarem Material, das aus der ersten Öffnung extrudiert wird.

## Revendications

1. Appareil destiné à la préparation d'une confiserie multirégion, l'appareil comprenant :
une buse (104) d'extrusion définissant un premier orifice (906), un deuxième orifice (908), et une extrémité (910) de sortie ;
un distributeur de matière configuré pour pousser un matériau extrudable à travers le premier orifice (906) ;
un module (102) de dosage comportant :
un boîtier (202) définissant :
une cavité (204) de retenue configurée pour retenir des inclusions (602) ;
une cavité (502) d'aspiration ; et
un accès (604), le deuxième orifice (908) de la buse (104) d'extrusion étant couplé de façon fluidique à l'accès ;
un disque (302) monté avec faculté de rotation par rapport à la cavité (204) de retenue, le disque définissant une pluralité d'ouvertures (306) servant à retenir les inclusions (602), la pluralité d'ouvertures (306) se déplaçant, lorsque le disque (302) tourne, par rapport au boîtier (202) de telle sorte que chacune de la pluralité d'ouvertures (306) atteint un premier emplacement où l'ouverture est exposée sur un côté du disque à la cavité (204) de retenue et sur le côté opposé du disque à la cavité (502) d'aspiration, l'accès (604) étant disposé de telle sorte que les inclusions libérées de la pluralité d'ouvertures à un deuxième emplacement pénètrent dans l'accès,
le deuxième orifice (908) étant configuré pour diriger les inclusions (602) afin qu'elles se combinent avec le matériau extrudable, et la buse (104) étant configurée pour l'extrusion du matériau extrudable et des inclusions combinés hors de l'extrémité (910) de sortie.

2. Appareil selon la revendication 1, dans lequel une ou plusieurs structures sont configurées de telle sorte que les inclusions (602) sont acheminées par gravité du module (102) de dosage au deuxième orifice (908).

3. Appareil selon la revendication 1, dans lequel chacune de la pluralité d'ouvertures (306) atteint le deuxième emplacement où l'ouverture est exposée à une structure (504) sans aspiration sur le côté opposé du disque (302).

4. Appareil selon la revendication 3, comprenant :
des inclusions (602) dans la cavité (204) de retenue,
la cavité de retenue étant configurée de telle sorte que des inclusions sont dirigées vers le premier emplacement,
l'aspiration appliquée par la cavité (502) d'aspiration à chaque ouverture (306) quand l'ouverture atteint le premier emplacement retenant une inclusion contre l'ouverture, l'aspiration appliquée par la cavité d'aspiration retenant l'inclusion contre l'ouverture jusqu'à ce que l'ouverture atteigne le deuxième emplacement où l'absence d'aspiration de la structure (504) sans aspiration provoque la libération de l'inclusion de l'ouverture.

5. Appareil selon la revendication 1, dans lequel la pluralité d'ouvertures (306) est disposée dans une rangée circulaire qui est concentrique avec un axe de rotation du disque.

6. Appareil selon la revendication 1, comprenant :
une deuxième buse d'extrusion définissant un troisième orifice et un quatrième orifice, le quatrième orifice de la deuxième buse d'extrusion étant couplé de façon fluidique à un deuxième accès ;
le distributeur de matière étant configuré pour pousser le matériau extrudable à travers le troisième orifice ; et
la pluralité d'ouvertures (306) étant disposée dans une première rangée circulaire sur le disque (302), l'accès (604) et la première rangée circulaire étant disposés de telle sorte que les inclusions (602) libérées de la première rangée circulaire au deuxième emplacement pénètrent dans le premier accès ,
le disque définissant une deuxième pluralité d'ouvertures dans une deuxième rangée circulaire sur le disque, le deuxième accès et la deuxième rangée circulaire étant disposés de telle sorte que les inclusions libérées de la deuxième rangée circulaire pénètrent dans le deuxième accès,
le quatrième orifice étant configuré pour diriger les inclusions afin qu'elles se combinent avec le matériau extrudable.

7. Appareil selon la revendication 6, comprenant :
une troisième buse d'extrusion définissant un cinquième orifice et un sixième orifice, le cinquième orifice de la troisième buse d'extrusion étant couplé de façon fluidique à un troisième accès ;
une quatrième buse d'extrusion définissant un septième orifice et un huitième orifice, le septième orifice de la quatrième buse d'extrusion étant couplé de façon fluidique à un quatrième accès ;
le distributeur de matière étant configuré pour pousser le matériau extrudable à travers les cinquième et septième orifices ; et
le module de dosage comportant un deuxième disque (302) monté avec faculté de rotation par rapport à la cavité de retenue, le deuxième disque définissant une troisième pluralité d'ouvertures (306) dans une troisième rangée circulaire sur le disque et une quatrième pluralité d'ouvertures dans une quatrième rangée circulaire sur le disque,
la deuxième pluralité d'ouvertures se déplaçant, lorsque le disque tourne, par rapport au boîtier (202) de telle sorte que chacune de la deuxième pluralité d'ouvertures atteint un troisième emplacement où l'ouverture est exposée sur un côté du disque à la cavité (204) de retenue et sur le côté opposé du disque à une cavité (502) d'aspiration, et un quatrième emplacement où l'ouverture est exposée à une structure (504) sans aspiration sur le côté opposé,
le troisième accès et la troisième rangée circulaire étant disposés de telle sorte que les inclusions libérées de la troisième rangée circulaire au quatrième emplacement pénètrent dans le troisième accès, le quatrième accès et la quatrième rangée circulaire étant disposés de telle sorte que les inclusions libérées de la quatrième rangée circulaire pénètrent dans le quatrième accès,
le sixième orifice étant configuré pour diriger les inclusions afin qu'elles se combinent avec le matériau extrudable, le huitième orifice étant configuré pour diriger les inclusions afin qu'elles se combinent avec le matériau extrudable.

8. Appareil selon la revendication 1, dans lequel le premier orifice (906) et le deuxième orifice (908) sont définis à l'intérieur de la buse d'extrusion.

9. Appareil selon la revendication 1, dans lequel le premier orifice (906) entoure à la manière d'un anneau le deuxième orifice (908).

10. Appareil selon la revendication 9, dans lequel le deuxième orifice (908) est généralement concentrique par rapport au premier orifice (906).

11. Appareil selon la revendication 9, dans lequel le premier orifice (906) et le deuxième orifice (908) sont en retrait par rapport à l'extrémité (910) de sortie de la buse (104) d'extrusion de telle sorte que les inclusions (602) se combinent avec le matériau extrudable à l'intérieur de la buse (104) d'extrusion.

12. Appareil selon la revendication 1, dans lequel la buse (104) d'extrusion est configurée pour former une bande du matériau extrudable et des inclusions (602) combinés et pour diriger la bande de matériau extrudable et d'inclusions combinés sur un élément de transport.

13. Appareil selon la revendication 1, dans lequel un diamètre de la pluralité d'ouvertures (306) est inférieur à un diamètre des inclusions (602).

14. Appareil selon la revendication 1, dans lequel les inclusions (602) sont un morceau de biscuit, ou une noix, ou un fruit, ou un bretzel, ou une combinaison de ceux-ci.

15. Procédé de préparation d'une confiserie multirégion comprenant :
l'extrusion d'un matériau extrudable à travers un premier orifice (906) ;
la rotation d'un disque (302) définissant une pluralité d'ouvertures (306) de telle sorte que chacune de la pluralité d'ouvertures se déplace dans et hors d'une accumulation d'inclusions (602) ;
l'application d'une aspiration à chacune de la pluralité d'ouvertures lorsque l'ouverture traverse l'accumulation d'inclusions ;
le maintien de l'aspiration sur chacune de la pluralité d'ouvertures lorsque l'ouverture va de l'accumulation d'inclusions à un emplacement de libération ;
la libération d'une inclusion de chacune de la pluralité d'ouvertures quand l'ouverture atteint l'emplacement de libération ;
l'acheminement des inclusions retenues par la pluralité d'ouvertures depuis l'emplacement de libération jusqu'à un deuxième orifice (908) ; et
la combinaison des inclusions sortant du deuxième orifice avec le matériau extrudable extrudé depuis le premier orifice.
